# EUROPEAN PATENT APPLICATION

(11) **EP 2 106 974 A1**
(43) Date of publication of application: **07.10.2009**
(21) Application number: 09150222.9
(22) Date of filing: 08.01.2009
(51) Int. Cl.: B60R 21/217, B60R 21/00

(54) **Airbag device and motorcycle with airbag device**

(30) Priority: 02.04.2008 JP 2008096610
(71) Applicant: Takata Corporation, Tokyo 106-8510 (JP)
(72) Inventor: Tsujimoto, Kei, Tokyo 106-8510 (JP)
(74) Representative: Vossius & Partner

(57) **Abstract**

The airbag device (110) is mounted on a vehicle, on which an occupant carries out a vehicle operation in a state of being exposed outside thereof as a normal practice. In a built-in state in which an inflator (113) and an airbag (121) are built in to a retainer (111), an inflator insertion opening edge portion (121a) of an inflator insertion opening (122), a flange edge portion (114) of an inflator flange (113b), and a retainer opening edge portion (111a) of a retainer opening (112) are disposed so as to overlap in this order in an area of the retainer opening. The inflator insertion opening edge portion (121a), the flange edge portion (114) and the retainer opening edge portion (111a) are tightened to be fixed with each other by means of a tightening fixture element (123), which is provided into a through hole passing therethrough in common. This airbag device provides a technique effective to facilitate improving sealing ability against a gas and a remaining residue in a built-in portion between the airbag and the inflator in the airbag device mounted on a vehicle on which an occupant carries out a vehicle operation in a state of being exposed outside thereof as a normal practice.

## Description

The present invention relates to a construction technique of an airbag device mounted on a vehicle on which an occupant carries out a vehicle operation in a state of being exposed outside thereof as a normal practice.

Hitherto, there are known various techniques for restraining an occupant by mounting an airbag device on a motorcycle vehicle. For example, there is a known technique for a two-wheel motor vehicle that an airbag accommodated in a casing installed on its vehicle body frame expands due to an inflating gas when a frontal collision occurs, and thereby an occupant is restrained (see, e.g., JP-A-2002-137777 (Patent Document 1)).
Incidentally, in a motorcycle vehicle of this type, since an airbag device has a configuration such that the airbag device itself is exposed to severe conditions in which it is susceptible to vibration due to an engine and the like, it is supposed that the vibration may cause deformation of a member intervening in a built-in portion between an airbag and an inflator such as, for example, a retainer or the like; in such a case, there is a fear that the sealing ability of the built-in portion against a gas and a remaining residue may be degraded.

Accordingly, the present invention addresses the above points with the object of providing a technique effective to facilitate improving the sealing ability of a built-in portion between an airbag and an inflator against a gas and a remaining residue in an airbag of an airbag device mounted on a vehicle, on which an occupant carries out a vehicle operation in a state of being exposed outside thereof as a normal practice. This object is achieved with the features of the claims.

The invention described in each of claims is able to be applied typically to construction of an airbag device mounted to a variety of vehicles on each of which an occupant carries out a vehicle operation in a state of being exposed outside thereof as a normal practice. It is noted that, in the vehicles in this specification, on each of which an occupant carries out a vehicle operation in a state of being exposed outside thereof as a normal practice, starting with a two-wheel motor vehicle such as a motorcycle, a motor scooter, or the like, there are included a wide variety of vehicles such as a vehicle having three or more travelling wheels on which an occupant sits astride (for example, a three-wheel type motorcycle used for home delivery and the like, and a three-wheel or four-wheel buggy type motorcycle for rough road travelling), a vehicle such as a snowmobile or the like travelling by means of sleighs or crawler belts, on which an occupant sits astride, a vehicle without a roof or with an openable roof (an open car, a convertible or a cabriolet), and the like.

The airbag device according to the present invention is an airbag device mounted on a vehicle, on which an occupant carries out a vehicle operation in a state of being exposed outside thereof as a normal practice, and includes at least an airbag, an inflator and a retainer.

The airbag is configured as a bag-like airbag or gasbag that expands into an occupant restraining area in the event of a vehicle accident. This airbag is accommodated in the retainer in a predetermined folding manner. In the "occupant restraining area", as herein called, there are included broad peripheral areas surrounding an occupant in the front, side, above and below of the occupant to be restrained upon occurrence of an accident, the peripheral areas being adjacent to the occupant. Likewise, as regards the "predetermined manner of folding", as herein called, there is included typically one of an accordion folding manner for providing an accordion shape, a roll folding manner for providing a roll shape, a mechanical folding manner, and the like, or a folding manner in which plural folding manners are combined.

The inflator is provided with at least an inflator body, an inflator flange and a gas injection port. The inflator body is configured as a cylindrical column-shaped body portion generating an airbag inflating gas. This inflator body is typically configured to contain an igniter (ignition device), an ignition agent, a gas generation agent, a filter, and the like. The inflator flange is configured as a flange portion vertically extending in a circumferential wall portion of the inflator body. The gas injection port is configured as a gas injection portion inserted through an inflator insertion opening of the airbag to be mounted therein. That is, the gas injection port is inserted in the airbag to be mounted therein by that the inflator body is inserted into the inflator insertion opening.

The retainer is configured to accommodate the airbag and the inflator, as well as to have a retainer opening through which the inflator body is inserted to be mounted. As regards the "accommodation" as herein called, it purports to widely include configurations in which all or a part of each of the airbag and the inflator, which are accommodated bodies, are accommodated.

By the way, in a vehicle of this type, because of the configuration that the airbag device itself is exposed to severe conditions in which it is susceptible to vibration due to an engine and the like, it is supposed that the vibration may cause deformation of a member intervening in a built-in portion between the airbag and the inflator such as, for example, the retainer or the like; in such a case, there is a fear that the sealing ability of the built-in portion against a gas and a remaining residue in the airbag may be degraded.

For this reason, in this airbag device, in a built-in state in which the inflator and the airbag are built in to the retainer, an inflator insertion opening edge portion of the inflator insertion opening, a flange edge portion of the inflator flange, and a retainer opening edge portion of the retainer opening are disposed in an area of the retainer opening so as to overlap in this order from the inside of the airbag, while the inflator insertion opening edge portion, the flange edge portion and the retainer opening edge portion are configured so as to be tightened to be fixed with each other by means of a tightening fixture element, which is provided into a through hole passing therethrough in common. Thereby, a first attached face, in which the inflator insertion opening edge portion and the flange edge portion are attached to each other, and a second attached face, in which the flange edge portion and retainer opening edge portion are attached to each other, are configured to intervene in a serial manner between an intra-airbag area and an extra-retainer area in the built-in state, the intra-airbag area being an area of the airbag in which the gas injection port is inserted to be mounted. In other words, an attached face region is provided to intervene on the path connecting between the intra-airbag area and the extra-retainer area, the attached face region being able of sealing in at least two stages. The herein called "intra-airbag area" is an internal space of the airbag and is defined as an area of the airbag in which the gas injection port of the inflator is inserted to be mounted. Likewise, the herein called "extra-retainer area" is defined, in the case when the area in which the airbag is accommodated is defined as an intra-retainer area, as the area other than the intra-retainer area. And, as regards the tightening fixture element, it is possible to employ a tightening structure using a bolt and a nut, a tightening structure using a rivet, or the like as appropriate.

According to the configuration like this of the airbag device according to the present invention, even in the case when deformation of the retainer occurs under the influence due to vibration of the engine and the like, it is possible to secure a sealing ability by means of the first attached face and the second attached face, which intervene in a serial manner between the intra-airbag area and the extra-retainer area, so a gas and a remaining residue in the airbag is effectively prevented from flowing to the extra-retainer area. Incidentally, in the present invention, the first attached face and the second attached face intervening in a serial manner between the intra-airbag area and the extra-retainer area may be configured to be the attached faces respectively disposed in two areas apart from each other, or may be formed to be adjoined with each other by that a single attached face is partitioned. Moreover, the present invention may allow, in addition to the first attached face and the second attached face, a further area of an attached face to intervene in a serial manner between the intra-airbag area and the extra-retainer area.

Additionally, in an airbag device having a further configuration according to the present invention, the tightening fixture element is preferably composed of a bag ring, a bolt shaft and a nut. The bag ring is configured to be a member that is attached to the inflator insertion opening edge portion from the inside of the airbag in the built-in state, in which the inflator and the airbag are built in to the retainer. The bolt shaft is configured as a long shaft-like bolt portion extending from the bag ring to the extra-retainer area through a through hole. The nut is configured as a nut portion engageable with the bolt shaft from the outside of the retainer opening edge portion. According to the configuration like this, in a construction with which the sealing ability in a built-in portion between an airbag and an inflator against a gas and a remaining residue in the airbag is facilitated to be improved, an airbag device is provided that employs a tightening construction using a bolt and a nut.

In an airbag device having a further configuration according to the present invention, the retainer is disposed in a peripheral area of a fuel storage portion among respective portions of the vehicle, the fuel storage portion serving to store fuel for driving the engine. In the "fuel storage portion", as herein called, starting with a fuel tank storing most of the fuel in a collective manner, there are included a wide sort of equipment such as distribution channels on the influent side with respect to the fuel tank, distribution channels on the distribution side with respect to the fuel tank, and a variety of equipment disposed in these distribution channels. Likewise, in the "peripheral area of the fuel storage portion", as herein called, there are included broad peripheral areas in proximity to or adjacent to the fuel storage portion in the above, side, front and rear thereof. According to the configuration like this, in an airbag device in which a retainer is disposed in a peripheral area of a fuel storage portion, it becomes possible to prevent a gas and a remaining residue in an airbag from flowing to the extra-retainer area, and from having an unfavorable influence to the fuel stored in the fuel storage portion.

The motorcycle with an airbag device according to the present invention is a motorcycle with an airbag device, on which an occupant carries out a vehicle operation in a state of being exposed outside thereof as a normal practice, the airbag device working in a manner that an airbag is supplied with an airbag inflating gas upon occurrence of a frontal collision of the vehicle and expands into an occupant restraining area in front of the occupant to restrain the occupant. In the "frontal collision", as herein called, there are included extensive patterns in which the motorcycle comes into collision with a collision object in a state of traveling or standing in front thereof such as, for example, another vehicle, a pedestrian, an impediment, or the like. And, the herein called "occupant restraining area" is defined as a space spreading in the direction in which the occupant moves forward, and serving for restraining the occupant being thrown toward the front of the vehicle, when the occupant is forced to move toward the front of the vehicle due to kinetic energy at a frontal collision.
In this motorcycle with an airbag device, it is preferable to employ the respective configurations described above as the airbag device. According to these configurations, a motorcycle with an airbag device is provided, the airbag device being effective in preventing a gas and a remaining residue in an airbag from flowing to an extra-retainer area.

As described above, according to the present invention, in an airbag device mounted on a vehicle, on which an occupant carries out a vehicle operation in a state of being exposed outside thereof as a normal practice, it becomes possible to facilitate improving sealing ability against a gas and a remaining residue in a built-in portion between an airbag and an inflator.

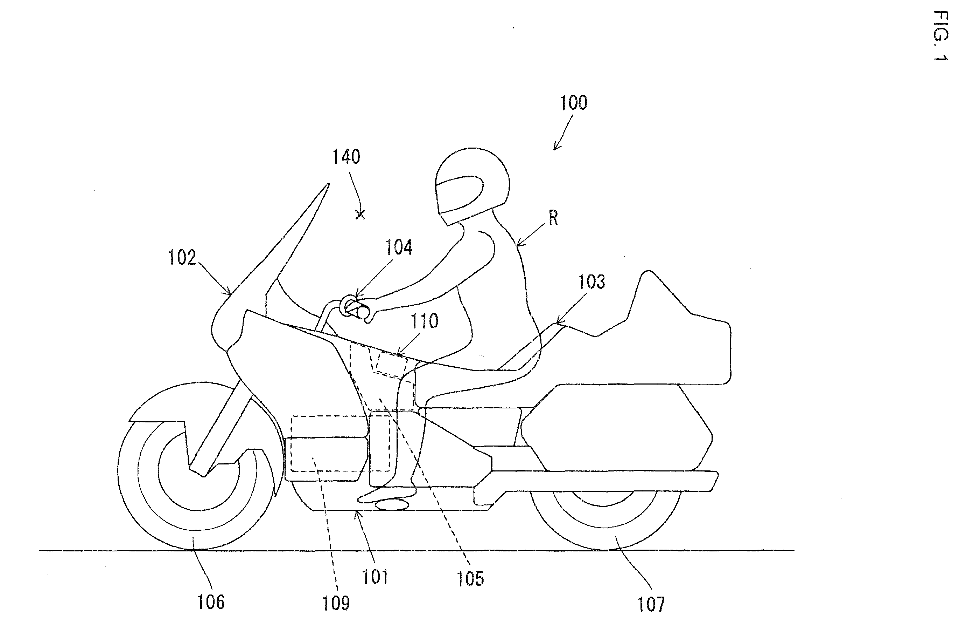

An embodiment of the present invention will be described below in detail with reference to the drawings.
Fig. 1 is a side elevational view of a two-wheel motor vehicle 100 according to an embodiment of a "vehicle" or a "motorcycle" of the present invention and shows a state of a vehicle, being the two-wheel motor vehicle 100, equipped with an airbag device 110;
Fig. 2 is a view showing a cross-sectional structure of the airbag device 110 in Fig. 1;
Fig. 3 is a partial magnified view showing the region A in Fig. 2 in a disassembled state; and
Fig. 4 is a partial magnified view showing the region A in Fig. 2 in a built-in state.
First, a general configuration of a two-wheel motor vehicle 100 will be described using Fig. 1. Here, Fig. 1 is a side elevational view of a two-wheel motor vehicle 100 according to an embodiment of a "vehicle" or a "motorcycle with an airbag device" of the present invention and shows a state of a vehicle, being the two-wheel motor vehicle 100, equipped with an airbag device 110.

As shown in Fig. 1, the two-wheel motor vehicle 100 is a vehicle on which an occupant R carries out a vehicle operation in a state of being exposed outside thereof as a normal practice, and is constructed as a motorcycle of a so-called touring type, having main components such as a body construction portion 101 composed of an engine, a main frame, and the like, a seat 103 allowing the occupant to sit astride thereon, a handle 104, a front wheel 106, a rear wheel 107, an engine 109, and the like.

An area above the body construction portion 101 of the two-wheel motor vehicle 100 and also on the front side of the occupant seated on the seat 103 is defined as an occupant restraining area 140 for restraining the occupant R properly upon occurrence of a frontal collision of the two-wheel motor vehicle 100. The occupant restraining area 140, as herein called, corresponds to the "occupant restraining area" in the present invention. In this embodiment, the "frontal collision" includes extensive collision patterns in which the two-wheel motor vehicle 100 comes into collision with a variety of collision objects (although not particularly shown by the drawings for convenience sake, collision objects such as, for example, other two-wheel motor vehicles, various kinds of vehicles except the two-wheel motor vehicles, bicycles, pedestrians, impediments, guard rails, or the like) on the front side thereof. Likewise, in this embodiment, the "occupant restraining area 140" is an area equivalent to the "occupant restraining area" in the present invention, and is defined as a space spreading above a line, in the direction of which the occupant R moves forward, and serving for restraining the occupant being thrown toward the front of the vehicle, when the occupant seated on the seat 103 is forced to move toward the front of the vehicle due to kinetic energy at a frontal collision.

In the body construction portion 101, a front portion 102 on the front side of the vehicle is provided with a head light, a variety of meters and the like, switches and the like, window shield and others. In an area between the front portion 102 and the seat 103, there are installed a fuel tank 105 and the airbag device 110 (also so called an "airbag module"). The fuel tank 105 is a tank storing fuel for driving the engine 109. The airbag device 110 is disposed in an upper portion of the vehicle with respect to the fuel tank 105 (and in an rear portion of the vehicle with respect to the fuel supply port of the fuel tank 105), and is configured as a device restraining the occupant by means of an airbag (airbag 121, described later), which expands into the occupant restraining area 140, in the event of a vehicle accident. This airbag device 110 is equivalent to the "airbag device" in the present invention.

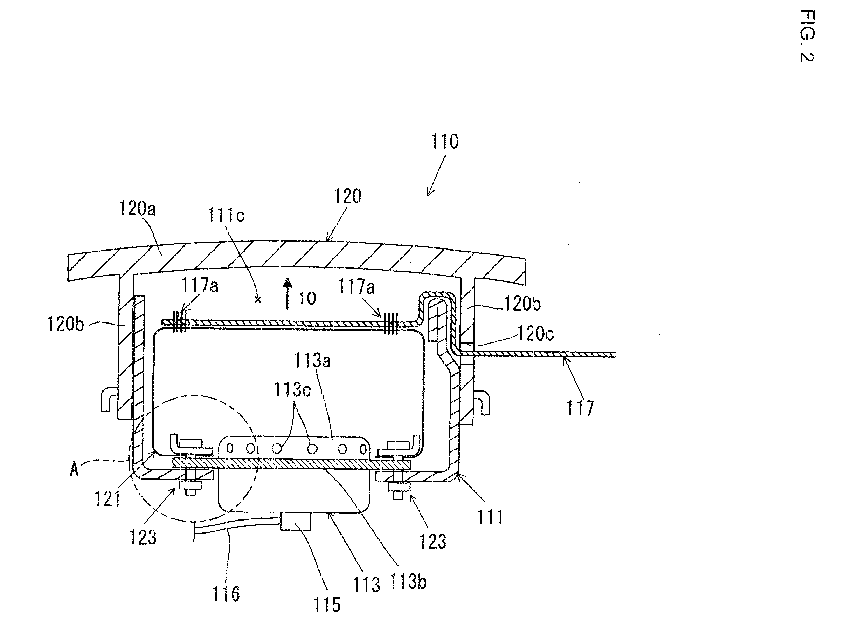

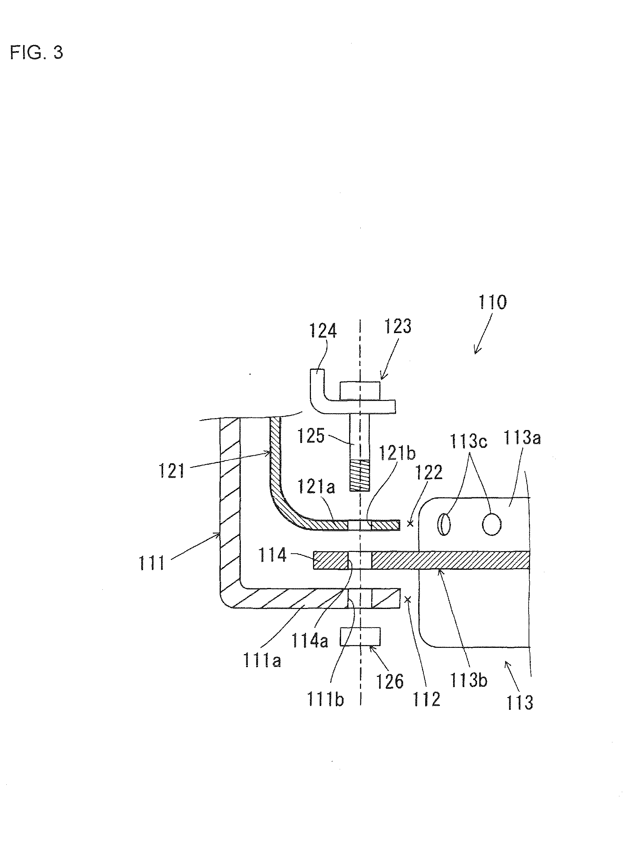

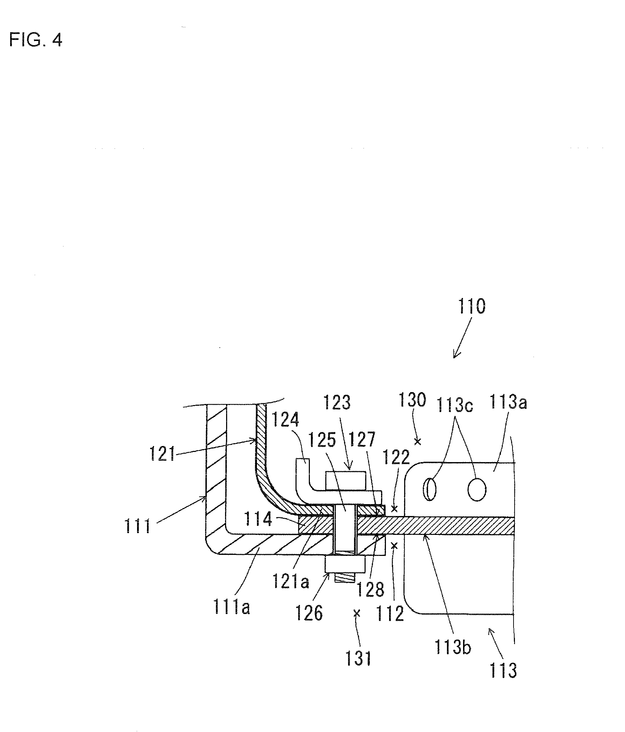

Figs. 2 to 4 are referred to for a specific configuration of the airbag device 110. Here, in Fig. 2, a cross-sectional structure of the airbag device 110 in Fig. 1 is shown. Fig. 3 is a partial magnified view showing the region A in Fig. 2 in a disassembled state, and Fig. 4 is a partial magnified view showing the region A in Fig. 2 in a built-in state.

As shown in Fig. 2, the airbag device 110 of this embodiment is constructed from main components such as an airbag 121, a retainer 111, inflators 113, connectors 115, harnesses 116, a webbing 117, a module cover 120, and the like.

The airbag 121 is configured in a three-dimensional bag shape by seaming a plurality of pieces of base fabric with each other, each of the pieces of base fabric being formed of a similar material as an airbag fabric for automobile use. The airbag 121 is folded in a predetermined folding manner and is accommodated in the retainer 111 having a bottomed box shape. The herein called "predetermined folding manner" is typically one of an accordion folding manner for providing an accordion shape, a roll folding manner for providing a roll shape, a mechanical folding manner, and the like, or a folding manner in which plural folding manners are combined. This airbag 121 is preferably disposed so that sewn portions 117a, in which the airbag 121 is sewn with the webbing 117, is oriented upwardly in a state of being folded, i.e., so that the sewn portions 117a are directed to the side of an airbag opening 111c of the retainer 111. This airbag opening 111c is configured as an opening part for allowing expanding or projecting movement of the airbag 121 to the outside of the retainer 111 in an upper portion of the bottomed box-shaped retainer 111. Due to this configuration, when the airbag 121 accommodated in the retainer 111 expands or projects outside the retainer 111 through the airbag opening 111c of the retainer 111, the expanding or projecting movement of the airbag 121 tends not to be interfered with the webbing 117. The airbag 121, as herein called, corresponds to the "airbag" in the present invention.

The webbing 117 is configured as a long length tie-up member, and one end portion thereof is joined to the airbag 121 by being sewn, while the other end portion thereof is connected to a fastening fixture (showing thereof is omitted) on a vehicle body side. This webbing 117 functions to tie up the airbag 121 to the vehicle body side of the two-wheel motor vehicle 100. Due to this configuration, it becomes possible to stabilize the behavior of the airbag 121 when it expands, and also to ensure stable restraint by means of the webbing 117 when the expanded airbag 121 restrains the occupant R. The webbing 117 may be composed of single webbing or plural webbings as necessary. Moreover, the webbing 117 may be formed by being fabricated into a belt-like shape or string-like shape typically with use of a similar webbing material (material fabricated into a belt shape using resin fiber strings) as a seatbelt for automobile use, or a similar material as an airbag fabric. In addition, in a configuration in which stable restraint of the occupant R by the airbag 121 itself is ensured, the webbing 117 tying up the airbag 121 to the vehicle body side may be omitted.

The module cover 120 is configured as a member for covering the airbag 121, which is folded in a state of being accommodated, by covering the airbag opening 111c of the retainer 111 from above, and includes at least a top portion 120a and a vertically extending portion 120b. This module cover 120 is formed typically by die molding using a plastic material. The top portion 120a of the module cover 120 is configured as a plate-like portion, which is specified as the top face of the airbag device 110, by extending substantially horizontally in a direction of the opening face in the area of the airbag opening 111c of the retainer 111. Moreover, in the top portion 120a, although not shown in the drawings, there is formed a tear line that is a planned torn line to be torn when being subjected to expanding force from the airbag 121. The vertically extending portion 120b of the module cover 120 is configured as a plate-like portion extending from the undersurface (backside) of the top portion 120a along the vertically extending wall surface of the retainer 111 in a direction perpendicular to the extension face of the top portion 120a. Furthermore, on the vehicle rear side (occupant side) of the vertically extending portion 120b, there is formed a webbing passing-through hole 120c for mutually connecting between the inside and outside of the module cover 120, and it becomes possible to allow the webbing 117 to extend over the covered interior and the uncovered exterior of the module cover 120 through the webbing passing-through hole 120c.
The module cover 120 and the retainer 111 are connected to each other in a manner such that the vertically extending portion 120b is mounted to be fixed to the vertically extending wall surface of the retainer 111 through the intermediary of a fastening fixture (showing thereof is omitted).

Each of the inflators 113 is at least provided with a function of generating an airbag inflating gas so as to allow the airbag 121 in a state of being folded to expand as being developed from the retainer 111 in the event of a vehicle collision. In this embodiment, each of the inflators 113 is a so-called disc-type inflator that includes an inflator body 113a having a cylindrical column shape, a tubular shape, or a disc shape, and an inflator flange 113b vertically extending in a circumferential wall portion of the inflator body 113a, and in this embodiment, a pair of disc-type inflators are built in the retainer 111 and configured to be disposed mutually in parallel along a vehicle width direction. In this configuration, the whole of the inflators 113 are built in inside the retainer 111 in a manner such that the undersurface of the inflator flange 113b of each of the inflators 113 is to be attached to a predetermined surface inside the retainer 111. The inflator body 113a and the inflator flange 113b, as herein called, correspond to the "inflator body" and the "inflator flange" in the present invention, respectively.

Each of the inflators 113 is provided with gas injection ports 113c through which the airbag inflating gas from the inflator body 113a flows out, and moreover the gas injection ports 113c are disposed inside the airbag 121, which provides a configuration that a generated inflating gas is supplied at once into the airbag 121. The inflators 113 and the gas injection ports 113c, as herein called, correspond to the "inflators" and the "gas injection ports" in the present invention, respectively.

In addition, although not particularly shown in the drawings, in the inflator body 113a of each of the inflators 113, there are contained an igniter (ignition device), an ignition agent, a gas generation agent, a filter, and the like. This igniter (ignition device) is electrically connected to a long length harness 116 in the connector 115 on the bottom portion of the case of the inflators 113. This harness 116 is connected to a control portion (showing thereof is omitted) on a vehicle side. In the configuration like this, upon detection of a vehicle collision, a control signal from the control portion on a vehicle side is transmitted to the igniter (ignition device) of each of the inflators 113 through the harness 116, and the airbag inflating gas is generated. It is noted that, as necessary, one or three or more of the disc-type inflators may be provided.

The retainer 111 is configured as a case body accommodating the airbag 121 folded in the folding manner described above and the inflators 113. The retainer 111, as herein called, corresponds to the "retainer" in the present invention. In this embodiment, this retainer 111 is disposed in a peripheral area of a fuel storage portion including the fuel tank 105. The fuel tank 105, as herein called, constitutes the "fuel storage portion" in the present invention. That is, in this "fuel storage portion", starting with a fuel tank 105 storing most of the fuel in a collective manner, there are included a wide sort of equipment including distribution channels on the influent side with respect to the fuel tank 105, distribution channels on the distribution side with respect to the fuel tank 105, and a variety of equipment disposed in these distribution channels. The airbag 121 and the inflators 113 accommodated in the retainer 111 are mounted to be fixed to the retainer 111 through the intermediary of tightening fixture elements 123. The tightening fixture element 123, as herein called, corresponds to the "tightening fixture element" in the present invention.

As shown in Fig. 3, this retainer 111 includes a retainer opening edge portion 111a, and the retainer opening edge portion 111a is provided with retainer openings 112 through each of which the inflator body 113a is inserted to be mounted. Moreover, in the retainer opening edge portion 111a, there are provided through holes 111b, which are involved in fixing by tightening or building-in of the retainer 111. The retainer opening edge portion 111a and the retainer openings 112, as herein called, correspond to the "retainer opening edge portion" and the "retainer openings" in the present invention, respectively.

In addition, in each of the inflators 113, there are provided through holes 114a, which are involved in fixing by tightening or building-in of the inflators 113, in a flange edge portion 114 of the inflator flange 113b, as shown in Fig. 3. The flange edge portion 114, as herein called, corresponds to the "flange edge portion" in the present invention.

Moreover, as shown in Fig. 3, the airbag 121 has an inflator insertion opening edge portion 121a, and in the inflator insertion opening edge portion 121a, there is provided inflator insertion openings 122, through each of which the gas injection ports 113c of the inflators 113 are inserted into the airbag 121. Furthermore, in the inflator insertion opening edge portion 121a, there are provided through holes 121b, which are involved in fixing by tightening or building-in of the airbag 121. The inflator insertion opening edge portion 121a and the inflator insertion openings 122, as herein called, correspond to the "inflator insertion opening edge portion" and the "inflator insertion openings" in the present invention, respectively.

Further additionally, the tightening fixture element 123, which is used for tightening to fix or building in of the retainer 111, the inflators 113 and the airbag configured described above, are each composed of a bag ring 124, which is attached to the inflator insertion opening edge portion 121a of the airbag 121 from the inside of the airbag 121 in the built-in state, a long shaft-like bolt shaft 125 extending from the bag ring 124, and a nut 126 engageable with the bolt shaft 125. This bolt shaft 125 of the tightening fixture element 123 is insertable into a common through hole constituted of each of the through holes 121b of the airbag 121, each of the through holes 114a of the inflator flange 113b, and each of the through holes 111b of the retainer 111. The bag ring 124, the bolt shaft 125 and the nut 126, as herein called, correspond to the "bag ring", the "bolt shaft" and "nut" in the present invention, respectively.

On the other hand, in a built-in state in which the inflators 113 and the airbag 121 are built in to the retainer 111, the inflator insertion opening edge portion 121a of each of the inflator insertion openings 122, the flange edge portion 114 of the inflator flange 113b, and the retainer opening edge portion 111a of each of the retainer openings 112 are disposed so as to overlap in this order in the area of each of the retainer openings 112, as shown in Fig. 4, while the inflator insertion opening edge portion 121a, the flange edge portion 114 and the retainer opening edge portion 111a are tightened to be fixed with each other by means of the tightening fixture elements 123, which are provided into common through holes passing therethrough in common. The common through holes, as herein called, are common through holes constituted of the through holes 121b of the airbag 121, the through holes 114a of the inflator flange 113b, and the through holes 111b of the retainer 111, and correspond to the "through holes" in the present invention.

In the configuration like this, a first attached face 127 and a second attached face 128 intervene in a serial manner between an intra-airbag area 130 and an extra-retainer area 131 in the built-in state described above.
The pair of the first attached face 127 and the second attached face 128 are configured as attached faces respectively disposed in two areas apart from each other. The intra-airbag area 130 is an internal space of the airbag 121 and is defined as the area of the airbag 121 in which the gas injection ports 113c of the inflators 113 are inserted to be mounted. Likewise, the extra-retainer area 131 is defined, in the case when the area in which the airbag 121 is accommodated is defined as an intra-retainer area, as the area other than the intra-retainer area. On the other hand, the first attached face 127 is an attached face where the inflator insertion opening edge portion 121a of the airbag 121 and the flange edge portion 114 of the inflator flange 113b are attached to each other, and the second attached face 128 is an attached face where the flange edge portion 114 of the inflator flange 113b and the retainer opening edge portion 111a of the retainer 111 are attached to each other.

Incidentally, since the airbag device 110 configured as described above has a configuration such that the airbag device 110 itself is exposed to severe conditions in which it is susceptible to vibration due to the engine 109 and the like, it is supposed that the vibration may cause deformation of a member intervening in a built-in portion between the airbag 121 and the inflator 113 such as, for example, the retainer or the like; in such a case, there is a fear that the sealing ability of the built-in portion against a gas and a remaining residue (fired residue) in the airbag 121 may be degraded. For this reason, in this embodiment, the configuration is employed that the first attached face 127 and the second attached face 128 intervene in a serial manner between the intra-airbag area 130 and the extra-retainer area 131 in this built-in state. In other words, an attached face region is provided to intervene on the path connecting between the intra-airbag area 130 and the extra-retainer area 131, the attached face region being capable of sealing in at least two stages. According to the configuration like this, even in the case when deformation of the retainer 111 occurs under the influence due to vibration of the engine 109 and the like, it is possible to secure a sealing ability by means of at least the first attached face 127 and the second attached face 128, which intervene in a serial manner between the intra-airbag area 130 and the extra-retainer area 131, so a gas and a remaining residue in the airbag 121 is effectively prevented from flowing to the extra-retainer area 131.

In the event that the two-wheel motor vehicle 100 configured described above gets into a collision accident on the side of its traveling direction, the occupant is forced to move (be thrown) toward the front of the two-wheel motor vehicle 100. In this embodiment, when a control signal from the control portion on the vehicle side is transmitted to the inflators 113 of the airbag device 110 through the harnesses 116 upon detection of this frontal collision, the inflators 113 are activated and the airbag inflating gas generated in the inflators 113 starts to be supplied into the airbag 121. Because of this, for example, in the airbag device 110 in Fig. 2 showing a state before it is activated, the expanding or projecting movement of the airbag 121 is initiated toward the direction of the arrow 10. Then, the airbag inflating gas is continuously fed from the gas injection ports 113c of the inflators 113 into the airbag 121, which results in that expanded portions are formed in succession from the inside of the airbag 121.

At the time immediately after the activation of the airbag device 110 is initiated, the airbag 121 pushes the top portion 120a of the module cover 120 from the underside thereof with its expanding force. The module cover 120 is torn along the tear line (showing thereof is omitted), which is a planned torn line, at the instant that the top portion 120a is subjected to the expanding force from the airbag 121, and is developed toward the front of the vehicle, having the vehicle front side of the vertically extending portion 120b serving as a hinge, to release the covered state of the airbag opening 111c of the retainer 111. Because of this, the expansion movement of the airbag 121 is allowed and then the airbag 121 expands or projects outside the retainer 111 through the airbag opening 111c of the retainer 111. It is noted that the shape and position of the tear line in the top portion 120a, the portion serving as the hinge when the module cover 120 is developed, and the like may be modified as necessary. For example, it is possible to configure so that the tear line is provided in a central area among all areas of the top portion 120a with respect to a vehicle fore-and-aft direction, and then the top portion 120a is torn to open into a portion to be developed toward the front of the vehicle along the tear line and the other portion to be developed toward the rear of the vehicle.

Furthermore, the initiation of the expanding movement of the airbag 121 causes to apply a tensile load to the webbing 117 sewn to the airbag 121 through the intermediary of one end portion thereof, and the expanding movement of the airbag 121 at a desirable position is assisted through the intermediary of the webbing 117. And, when a completion state of expansion, in which the airbag 121 is fully inflated and extends, is formed, the inflated airbag 121 fills up the occupant restraining area (occupant restraining area 140 in Fig. 1) formed in the front of the occupant R, and thereby the occupant R, who is forced to move along a forward moving direction due to kinetic energy at a vehicle collision, is restrained by the inflated airbag 121.

As described above, according to the above embodiment, an airbag device 110 is provide that is effective to facilitate improving the sealing ability of the built-in portion between the airbag 121 and the inflator 113 against a gas and a remaining residue in the airbag 121. In addition, according to the above embodiment, a two-wheel motor vehicle 100 is provided on which an airbag device 110 effective to facilitate improving the sealing ability against a gas and a remaining residue in the airbag 121 is mounted.

It should be noted that the present invention is not limited to the above embodiment, but a variety of application and modification thereof can be considered. For example, the following embodiments on which the above embodiment is applied are able to be implemented.

In the above embodiment, a case is described that a first attached face 127 and a second attached face 128 intervene in a serial manner between the intra-airbag area 130 and the extra-retainer area 131 so as to be apart from each other, but the present invention allows that the respective areas corresponding to the first attached face and the second attached face are formed to be adjoined with each other by that a single attached face is partitioned. Moreover, the present invention may allow, in addition to the first attached face and the second attached face, a further area of an attached face to intervene in a serial manner between the intra-airbag area and the extra-retainer area.

Additionally, in the above embodiment, a case is described in which a tightening structure using bolts and nuts is employed, but the present invention allows that other tightening structures such as a tightening structure using rivets are employed.

Additionally, in the above embodiment, there is described about a two-wheel motor vehicle 100 of a so-called touring type, but the present invention is able to be applied to other types of motorcycle such as a motor scooter type having a space between its handle and a seat, in which lateral movement of occupant's legs is allowed, motorcycle vehicles that are other than the two-wheel motor vehicle 100 and have a wheel structure of two wheels or more, and a vehicle without a roof or with an openable roof (an open car, a convertible or a cabriolet).

Additionally, in the above embodiment, a case is described in which the airbag device 110 is disposed in an upper portion of the vehicle with respect to the fuel tank 105 (and in a rear portion of the vehicle with respect to the fuel supply port of the fuel tank 105), but the position on a vehicle body where the airbag device 110 is disposed may be modified as appropriate, as long as the airbag 121 is able to expand in a desired area. For example, the airbag device 110 may be disposed in a position displaced to the vehicle front side or to the vehicle rear side from the position indicated in Fig. 1.

## Claims

1. An airbag device (110) mounted on a vehicle, on which an occupant carries out a vehicle operation in a state of being exposed outside thereof as a normal practice,
wherein, in a built-in state in which an inflator (113) and an airbag (121) are built in to a retainer (111), an inflator insertion opening edge portion (121a) of an inflator insertion opening (122), a flange edge portion (114) of an inflator flange (113b), and a retainer opening edge portion (111a) of a retainer opening (112) are disposed in an area of the retainer opening so as to overlap in this order from the inside of the airbag, while the inflator insertion opening edge portion (121a), the flange edge portion (114) and the retainer opening edge portion (111a) are configured so as to be tightened to be fixed with each other by means of a tightening fixture element (123), which is provided into a through hole passing therethrough in common.

2. The airbag device according to claim 1, wherein
the bag-like airbag is adapted to expand into an occupant restraining area in the event of a vehicle accident,
the inflator comprises a cylindrical column-shaped inflator body generating an airbag inflating gas, the inflator flange vertically extending in a circumferential wall portion of the inflator body, and a gas injection port inserted through the inflator insertion opening of the airbag to be mounted therein, the inflator serving for supply of the airbag inflating gas generated in the inflator body to the airbag through the gas injection port.

3. The airbag device according to claim 1 or 2, wherein the retainer accommodates the airbag and the inflator, and
wherein the retainer opening (112) is adapted for insertion of the inflator body to be mounted.

4. The airbag device according to claim 1, 2 or 3, wherein a first attached face, in which the inflator insertion opening edge portion and the flange edge portion are attached to each other, and a second attached face, in which the flange edge portion and retainer opening edge portion are attached to each other, are configured to intervene in a serial manner between an intra-airbag area and an extra-retainer area in the built-in state, the intra-airbag area being an area of the airbag in which the gas injection port is inserted to be mounted.

5. The airbag device according to Claim 1, 2, 3 or 4,
wherein the tightening fixture element is composed of a bag ring, which is attached to the inflator insertion opening edge portion from the inside of the airbag in the built-in state, a long shaft-like bolt shaft extending from the bag ring to the extra-retainer area through the through hole, and a nut engageable with the bolt shaft from the outside of the retainer opening edge portion.

6. The airbag device according to any one of Claims 1 or 5,
wherein the retainer is configured to be disposed in a peripheral area of a fuel storage portion among respective portions of the vehicle, the fuel storage portion serving to store fuel for driving an engine.

7. A motorcycle with an airbag device according to any one of claims 1 to 6, on which an occupant carries out a vehicle operation in a state of being exposed outside thereof as a normal practice, the airbag device working in a manner that an airbag is supplied with an airbag inflating gas upon occurrence of a frontal collision of the vehicle and expands into an occupant restraining area in front of the occupant to restrain the occupant.
